# FASCICULE DE BREVET EUROPEEN

(11) **EP 0 904 574 B1**
(45) Date de publication et mention de la délivrance du brevet: **26.01.2000**
(21) Numéro de dépôt: 97926088.2
(22) Date de dépôt: 03.06.1997
(51) Int. Cl.: G05D 1/00, G05D 1/04

(54) **PROCEDE DE PILOTAGE D'UN AERODYNE POUR L'EVITEMENT VERTICAL D'UNE ZONE**
VERFAHREN ZUR STEUERUNG EINES FLUGZEUGS ZUR SENKRECHTEN VERMEIDUNG EINER ZONE
METHOD FOR CONTROLLING AN AERODYNE FOR THE VERTICAL AVOIDANCE OF A ZONE

(30) Priorité: 07.06.1996 FR 9607078
(43) Date de publication de la demande: 31.03.1999
(73) Titulaire: THOMSON-CSF SEXTANT, 78141 Vélizy Villacoublay (FR)
(72) Inventeur: DEKER, Guy, Thomson-CSF S.C.P.I., F-94117 Arcueil Cedex (FR)
(74) Mandataire: Guérin, Michel
(86) Numéro de dépôt international: FR9700972
(87) Numéro de publication internationale: WO9748027

(56) Documents cités:
- US-A- 5 265 024
- US-A- 5 337 982
- US-A- 5 416 713

## Description

La présente invention concerne procédé de pilotage automatique d'un aérodyne permettant l'évitement vertical d'une zone, par exemple une zone météo dangereuse ou dans laquelle le confort et la sécurité du vol risquent d'être affectés.

Elle s'applique notamment, mais non exclusivement, à l'évitement d'une zone non visible, par exemple de forte turbulence, comme les turbulences de ciel clair, ou dans laquelle le risque de givrage est important. Cette zone est délimitée grossièrement par un contour horizontal de grandes dimensions et des limites verticales supérieures et inférieures. De telles informations sont, par exemple, reçues par l'aérodyne par l'intermédiaire d'un dispositif de transmission de données numériques, par exemple Data-Link, et ont été envoyées par une station au sol, éventuellement à partir d'informations émises par les aérodynes avoisinants équipés d'un système ADS (Automatic Dependent Surveillance).

Par exemple la demande européenne EP-A-0 617 349 divulgue un procédé de pilotage automatique d'un aérodyne pour l'évitement vertical d'une zone fixe à contours géométriques prédéfinis, l'aérodyne étant équipé d'un dispositif de pilotage automatique, dans lequel ont été introduits une route prévue et un profil vertical de trajectoire comprenant une altitude de vol de croisière. Le procédé comprend l'acquisition des limites de la zone à éviter, la localisation de la zone à éviter par rapport à la route prévue de l'aérodyne pour déterminer si celle-ci traverse la zone à éviter et la mise à jour de la nouvelle altitude de vol dans le dispositif de pilotage automatique.

A l'heure actuelle, c'est au pilote de gérer manuellement le problème météorologique soit en effectuant un évitement à vue de la zone, soit en prenant le risque de traverser la zone, ces opérations devant tenir compte d'un nombre important de paramètres, et notamment, de la réglementation en vigueur dans l'espace aérien traversé, des performances de l'aérodyne, et de la masse de carburant dans les réservoirs de celui-ci. Par ailleurs, étant donné que les phénomènes météorologiques dits de temps clairs, sont par définition invisibles, il arrive fréquemment que le pilote soit averti d'un tel phénomène que peu de temps avant de pénétrer dans la zone où celui-ci se trouve localisé, et dans bien des cas, ce temps est insuffisant pour lui permettre de prendre en compte tous les paramètres nécessaires afin de déterminer la meilleure trajectoire d'évitement.

La présente invention a pour but de supprimer cet inconvénient et d'alléger la tâche du pilote. A cet effet, elle propose un procédé pour le pilotage automatique d'un aérodyne pour l'évitement vertical d'une zone fixe à contours géométriques prédéfinis, l'aérodyne étant équipé d'un dispositif de pilotage automatique, dans lequel ont été introduits une route prévue, une altitude de vol de croisière et la position du point de descente prévu vers la piste d'atterrissage.

Selon l'invention, ce précédé est caractérisé en ce qu'il comprend successivement les étapes suivantes :
- l'acquisition des limites de la zone à éviter sous la forme d'un contour horizontal et d'altitudes supérieure et inférieure, et la modélisation de la zone à éviter par un volume cylindrique délimité par le contour horizontal et les altitudes supérieures et inférieures,
- la localisation du volume cylindrique par rapport à la route prévue de l'aérodyne pour déterminer si celle-ci traverse le volume cylindrique,
- si la route prévue traverse le volume cylindrique, la détermination des points d'entrée et de sortie de la route prévue dans le volume cylindrique,
- le calcul des altitudes optimale et maximale susceptibles d'être atteintes par l'aérodyne, et de la masse de celui-ci lors du passage par le point d'entrée, compte tenu de la masse courante de l'aérodyne, et de sa consommation en carburant pour atteindre ce point,
- le calcul d'une nouvelle altitude de vol pour l'évitement vertical de la zone, et d'un point de changement d'altitude pour atteindre l'altitude d'évitement, en fonction des altitudes des limites inférieure et supérieure de la zone, des altitudes courante, maximale et optimale de l'aérodyne, et de la position des points prévus de sortie du volume cylindrique et de descente de l'aérodyne, et
- la mise à jour de la nouvelle altitude de vol, et l'introduction de la position du point de changement d'altitude, dans le dispositif de pilotage automatique.

Grâce à ces dispositions, le pilote se trouve complètement déchargé de la modification du plan de vol et du pilotage de l'aérodyne en vue d'éviter la zone dangereuse.

Selon une particularité de l'invention, l'évitement de la zone est effectué par en dessous lorsque l'altitude supérieure de la zone se trouve au-dessus de l'altitude maximale susceptible d'être atteinte par l'aérodyne au point d'entrée, ou bien lorsque le point de descente prévu se trouve dans le volume cylindrique.

Selon une autre particularité de l'invention, l'altitude d'évitement est de préférence égale à l'altitude optimale de l'aérodyne au point d'entrée.

Un mode de réalisation du procédé selon l'invention sera décrit ci-après, à titre d'exemple non limitatif, avec référence aux dessins annexés dans lesquels :
La figure 1 représente schématiquement les équipements électroniques d'un aérodyne comprenant un calculateur destiné à mettre en oeuvre le procédé selon l'invention ;
La figure 2 représente schématiquement en perspective la trajectoire d'un aérodyne qui traverse un volume cylindrique enveloppant une zone à éviter ;
La figure 3 montre en coupe dans un plan vertical la trajectoire initialement prévue de l'aérodyne, et les trajectoires possibles d'évitement, par rapport au volume cylindrique enveloppant la zone à éviter ;
Les figures 4, 5a et 5b illustrent schématiquement l'algorithme exécuté pour traiter les informations relatives aux limites d'une zone à éviter ;

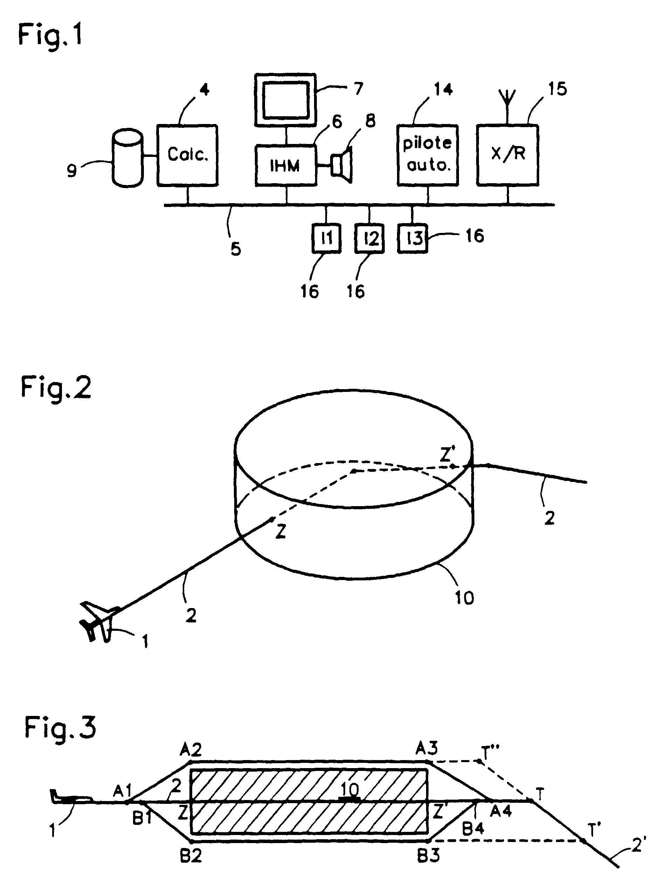

Tel que représenté sur la figure 1, le procédé d'évitement selon l'invention est particulièrement conçu pour être exécuté par un calculateur 4 installé à bord d'un aérodyne, qui est couplé par l'intermédiaire d'un bus de transmission de données 5 appelé "bus avion", aux équipements de navigation incluant un dispositif de pilotage automatique 14 et des instruments de navigation 16, à un dispositif de transmission de données numériques 15, par exemple Data-Link, ainsi qu'à un dispositif d'interface homme/machine (IHM) 6 comprenant un élément de commande et des éléments de signalisation, tel qu'un écran de visualisation 7 et un haut-parleur 8 installés dans le cockpit.
D'une manière connue, le dispositif de pilotage automatique 14 comprend une mémoire dans laquelle est enregistrée la trajectoire prévue de l'aérodyne comprenant une trajectoire latérale et un profil vertical. La trajectoire latérale est constituée d'une route formée d'une succession de segments de droite entre le point de départ et le point de destination, et de trajectoires de transition permettant de relier un segment à l'autre. Le profil vertical indique notamment l'altitude de croisière et la position du point de descente vers la piste d'atterrissage prévue.

Le dispositif de transmission de données 15, constitué par exemple par un système de communication Data-Link, est susceptible de recevoir des informations météorologiques d'une station au sol ou des aérodynes situés à portée radioélectrique. Ces informations permettent de localiser une zone d'activité météorologique, par exemple, où règnent de fortes turbulences ou des conditions de givrage importantes.

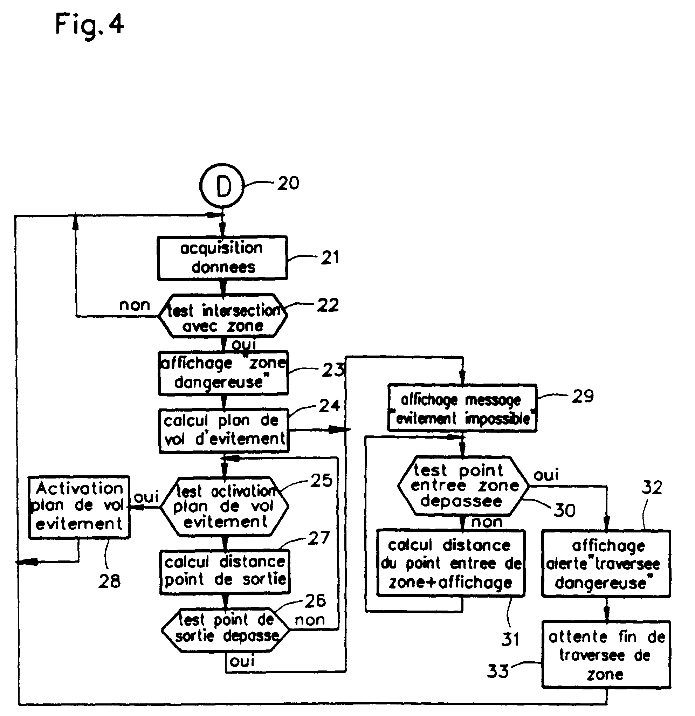

Lorsque de telles informations sont reçues, le calculateur 4 exécute l'algorithme montré sur la figure 4. Cet algorithme consiste tout d'abord, à l'étape 21, à acquérir les données fournies par le dispositif de transmission de données 15 et à délimiter la zone météorologique par un volume cylindrique 10 défini par un contour horizontal et des altitudes inférieure et supérieure (figure 2).

A l'étape 22, le calculateur 4 procède à la localisation de la route 2 définie par le plan de vol prévu, par rapport à la zone météorologique. Pour cela, le calculateur 4 accède à la définition du plan de vol prévu, lequel est par exemple mémorisé par le dispositif de pilotage automatique 14.

Si l'aérodyne ne va pas pénétrer dans la zone météorologique, on revient au début 20 de l'algorithme pour poursuivre l'analyse des informations fournies par le dispositif de transmission de données 15. Dans le cas contraire, le calculateur 4 envoie à l'étape 23 un message destiné à l'afficheur 7 pour avertir le pilote que la route 2 à parcourir par l'aérodyne 1 traverse une zone d'activité météorologique 10. Cette information peut être complétée par l'affichage sur l'écran 7 de la carte de la région survolée avec indication en surimpression des limites de la zone.

Il s'agit alors de déterminer une trajectoire d'évitement telle que A1-A2-A3-A4 passant au-dessus du volume cylindrique 10 ou B1-B2-B3-B4 passant en dessous du volume cylindrique 10, montrées sur la figure 3. Ces trajectoires sont définies par un point de sortie A1, B1 de la trajectoire initialement prévue, une phase de changement d'altitude A1-A2, B1-B2 pour rejoindre l'altitude d'évitement, une phase à altitude constante A2-A3, B2-B3 à l'altitude d'évitement, et une phase de descente de retour à la trajectoire prévue A3-A4, B3-B4 et un point de retour A4, B4 à la trajectoire prévue.

Il est à noter que dans certains cas, ce point de retour pourra se situer après le point de descente T initialement prévu, la trajectoire d'évitement rejoignant directement la trajectoire de descente 2' à l'altitude d'évitement.

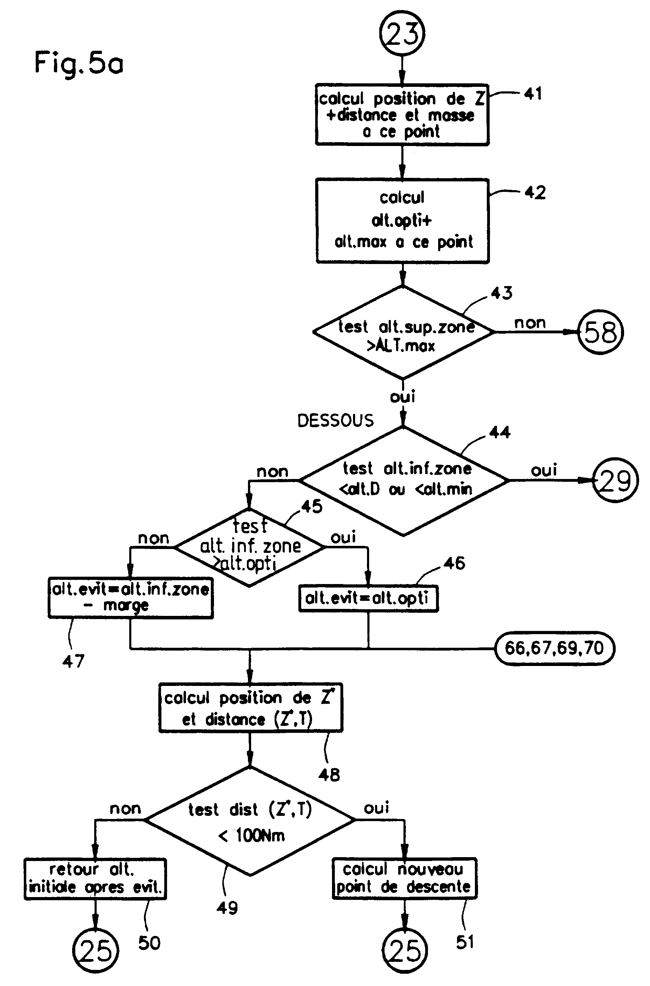

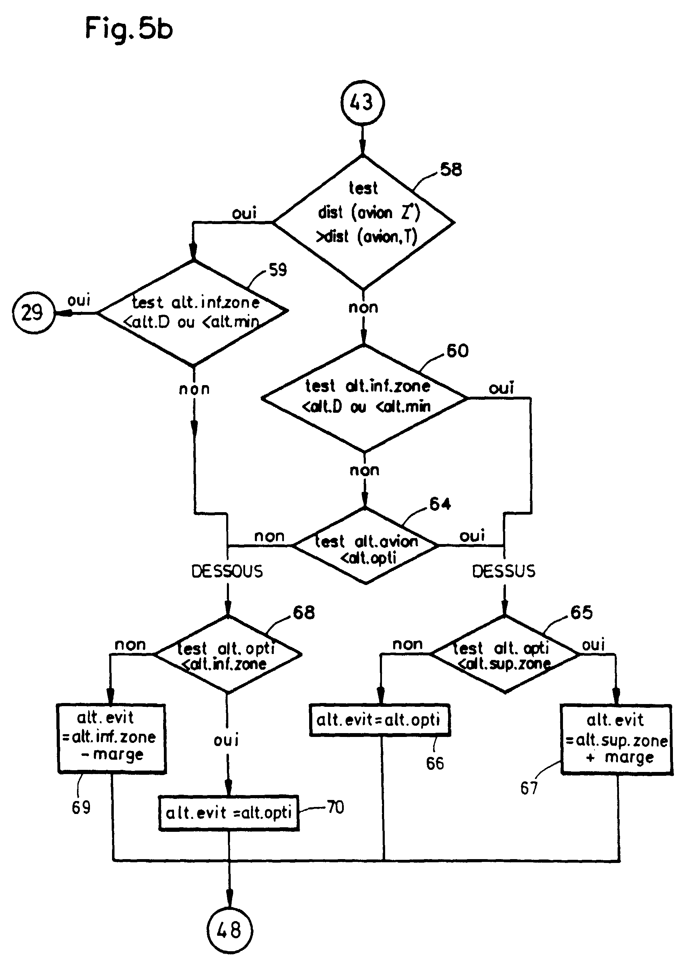

A l'étape 24, le calculateur 4 déclenche la détermination d'une trajectoire d'évitement. Lors de cette étape, il détermine donc notamment l'altitude d'évitement dont un exemple d'algorithme de calcul est représenté sur les figures 5a et 5b et le point de sortie A1, B1 de la trajectoire prévue pour atteindre l'altitude d'évitement déterminée (figure 3)
Ce point est calculé en tenant compte des caractéristiques de l'aérodyne, de la réglementation aérienne qui définit un taux de montée ou de descente maximum, ainsi que de l'écart entre l'altitude courante de l'aérodyne 1 et celle d'évitement à atteindre.

A l'étape 25, le calculateur 4 se met en attente de la validation par le pilote du nouveau plan de vol incluant la trajectoire d'évitement déterminée à l'étape 24, et ce jusqu'à ce que soit dépassé le point de sortie A1, B1 de la route 2 initialement prévue 2 (étape 26). Pendant cette attente, le calculateur 4 calcule et affiche la valeur de la distance de ce point de sortie A1, B1, compte tenu de la position courante de l'aérodyne 1, cette valeur étant rafraîchie périodiquement (étape 27).

Si pendant cette attente, le pilote a validé le nouveau plan de vol, celui-ci est envoyé au dispositif de pilotage automatique 14 en remplacement de celui 2 initialement prévu, et devient alors actif (étape 28). Le calculateur 4 se met ensuite de nouveau en attente de nouvelles informations à l'étape 21.

Si le pilote n'a pas validé le nouveau plan de vol avant le franchissement du point de sortie A1, B1, le calculateur 4 envoie à l'étape 29 un message au pilote pour indiquer que ce point de sortie est dépassé et que l'évitement de la zone est maintenant impossible. Ensuite, à l'étape 30, il calcule la distance entre la position courante de l'aérodyne 1 et le point Z d'entrée de la zone délimitée par le volume cylindrique 10. Tant que l'aérodyne 1 n'a pas atteint le point Z, cette distance est affichée avec rafraîchissement périodique (étape 31). Lorsque ce point Z est franchi, le calculateur 4 envoie un message d'alerte qui signale au pilote que l'aérodyne 1 se trouve dans la zone météorologique 10 (étape 32). Le calculateur 4 se met ensuite en attente de la sortie de la zone délimitée par le volume cylindrique 10, compte tenu de la position du point de sortie Z' de cette zone, ainsi que de la position courante et de la vitesse de l'aérodyne 1 (étape 33), avant de revenir à l'étape 21 d'acquisition des données, avec effacement du message d'alerte.

Sur la figure 5a, la détermination de l'altitude d'évitement débute par le calcul de la position du point d'entrée Z dans la zone à éviter, ainsi que de la distance séparant ce point de la position courante de l'aérodyne 1 et de la masse de ce dernier en ce point, compte tenu de la masse courante et de la consommation de carburant de l'aérodyne (étape 41).

A l'étape 42, le calculateur 4 détermine les altitudes optimale (alt.opti) et maximale (alt.max) de l'aérodyne 1 au point Z compte tenu de la masse et des performances de l'aérodyne, ainsi que de la distance séparant l'aérodyne de ce point. Si l'altitude de la limite supérieure de la zone à éviter (alt.sup.zone) n'est pas supérieure à l'altitude maximale (alt.max) que peut atteindre l'aérodyne 1 au point Z (étape 43), le calculateur 4 passe à l'étape 58 représentée sur la figure 5b. Dans le cas contraire, l'évitement supérieur (par au dessus de la zone) est impossible et donc l'évitement inférieur (par en dessous de la zone) est obligatoire, et le calculateur 4 passe à l'étape 44 où il vérifie que l'altitude (alt.inf.zone) de la limite inférieure de la zone à éviter 10 satisfait à des conditions dépendant de l'altitude d'origine donnée par le plan de vol d'origine et de l'altitude minimum autorisée (alt.min). Cette altitude minimum peut être soit d'origine réglementaire, comme les altitudes MEA (Minimum Enroute Altitude), et MORA (Minimum Offroute Altitude), soit d'origine opérationnelle (Altitude Minimum Opérationnelle qui correspond au niveau de vol réglementaire au-dessus du niveau FL195 par exemple).
Par exemple l'altitude de la limite inférieure de la zone doit être supérieure à l'altitude minimum autorisée, et doit être supérieure à une valeur (alt.D) obtenue en retranchant une certaine valeur prédéterminée à l'altitude initiale.

Si l'altitude de la limite inférieure de la zone ne satisfait pas à ces conditions, l'évitement automatique de la zone est impossible et le traitement se poursuit à partir de l'étape 29. Dans le cas contraire, le calculateur 4 vérifie à l'étape 45, si l'altitude de la limite inférieure de la zone (alt.inf.zone) est supérieure à l'altitude optimale (alt.opti) calculée à l'étape 42. Si tel est le cas l'altitude d'évitement à rejoindre (alt.evit) correspond à l'altitude optimale (étape 46), sinon l'altitude d'évitement se trouve juste au dessous de la zone 10, calculée avec une certaine marge de sécurité (étape 47).

La suite de l'algorithme consiste à déterminer le point de début de descente pour l'atterrissage.
Pour cela, le calculateur 4 détermine à l'étape 48 la position du point de sortie Z' de la route prévue 2 du volume cylindrique 10, et la distance entre ce point et le point T prévu de descente vers la piste d'atterrissage. Si cette distance est supérieure à une valeur de seuil, par exemple 100 milles nautiques, cela signifie que l'aérodyne peut rejoindre le point de descente T à l'altitude prévue (étape 50). Dans le cas contraire, l'aérodyne 1 ne doit pas rejoindre ce point de descente T, mais va rester à l'altitude d'évitement calculée précédemment, jusqu'à ce qu'il rejoigne la phase de descente 2' de la trajectoire prévue. Le calculateur 4 détermine alors le nouveau point de descente T' ou T" qui correspond au point de jonction de la trajectoire d'évitement (inférieur ou supérieur) à l'altitude d'évitement avec la trajectoire de descente 2' initialement prévue (étape 51). A l'issue des étapes 50 et 51, l'exécution se poursuit par l'étape 25.

Si à l'étape 43, l'altitude supérieure (alt.sup.zone) de la zone 10 est inférieure à l'altitude maximale (alt.max) que peut atteindre l'aérodyne 1 calculée à l'étape 42, le calculateur 4 détermine à l'étape 58, si le point de descente prévu T se trouve ou non dans la zone 10, en comparant les distances entre la position courante de l'aérodyne 1 et les points Z' et T (figure 5b). Si le point T se trouve dans la zone, l'évitement supérieur n'est pas possible et le calculateur 4 procède à un calcul d'évitement inférieur en passant à l'étape 59 où il vérifie que l'évitement inférieur est possible. Dans le cas contraire, le calculateur détermine à l'étape 60 si l'évitement inférieur est possible en comparant l'altitude inférieure (alt.inf.zone) de la zone 10 à l'altitude minimum autorisée (alt.min), ainsi qu'à la valeur (alt.D) (obtenue en retranchant une certaine valeur prédéterminée de l'altitude donnée par le plan de vol d'origine). Si l'évitement inférieur est impossible, l'évitement est effectué en passant par dessus la zone.

Si l'évitement est possible par dessus et par dessous la zone, et si l'altitude courante (alt.avion) de l'aérodyne 1 est inférieure à l'altitude optimale (alt.opti) (étape 64), alors on procède à un évitement supérieur, sinon on procède à un évitement inférieur.

A l'étape 59, l'évitement supérieur n'est pas possible et le calculateur examine si l'évitement inférieur est possible en comparant, comme cela a déjà été décrit, l'altitude inférieure (alt.inf.zone) de la zone 10 aux valeurs minimales d'altitude (alt.min et alt.D). Si l'évitement inférieur est impossible, le traitement se poursuit à partir de l'étape 29.

Pour procéder à un évitement supérieur à la suite des étapes 60 ou 64, le calculateur 4 compare l'altitude optimale (alt.opti) avec l'altitude supérieure (alt.sup.zone) de la zone 10 (étape 65). Si l'altitude optimale est supérieure à l'altitude supérieure de la zone 10, l'altitude d'évitement (alt.evit) correspond à l'altitude optimale (alt.opti) (étape 66), sinon, l'altitude d'évitement correspond à l'altitude supérieure (alt.sup.zone) de la zone 10 avec une marge de sécurité (étape 67). L'exécution de l'algorithme se poursuit par l'étape 48, pour déterminer la position du point de descente T ou T" vers la piste d'atterrissage.

D'une manière analogue, pour procéder à un évitement inférieur à la suite des étapes 59 ou 64, le calculateur 4 examine si l'altitude optimale (alt.opti) n'est pas inférieure à l'altitude inférieure (alt.inf.zone) de la zone 10 (étape 68), l'altitude d'évitement (alt.evit) correspond à l'altitude inférieure de la zone 10 avec une marge de sécurité (étape 69), sinon elle correspond à l'altitude optimale (étape 70).

Le calculateur passe ensuite à l'étape 48 décrite ci-avant pour déterminer le point de descente T ou T' vers la piste d'atterrissage.

En pratique, l'altitude à respecter par l'aérodyne est calculée sous la forme d'un niveau de vol, les niveaux de vol étant espacés entre eux de 100 pieds (30,48 m). Ainsi, à l'étape 42, le calculateur 4 détermine également les niveaux de vol optimal, respectivement maximal, en arrondissant les altitudes calculées au niveau de vol le plus proche, respectivement inférieur. A l'étape 43, on compare en fait l'altitude supérieure de la zone au niveau de vol maximum. Aux étapes 44 et 60, on compare l'altitude inférieure de la zone à la valeur alt.D obtenue en retranchant au niveau de vol initialement prévu, par exemple, la hauteur de trois niveaux de vol, ainsi qu'au niveau de vol minimum FL195.

De même, l'altitude d'évitement est calculée en niveau de vol, et la marge utilisée aux étapes 47, 67 et 69 correspond à un niveau de vol.

## Revendications

1. Procédé de pilotage automatique d'un aérodyne pour l'évitement vertical d'une zone fixe à contours géométriques prédéfinis, l'aérodyne (1) étant équipé d'un dispositif de pilotage automatique (14), dans lequel ont été introduits une route prévue (2, 2') et un profil vertical de trajectoire comprenant une altitude de vol de croisière et la position d'un point de descente (T) vers la piste d'atterrissage prévue, le procédé de pilotage automatique comprenant successivement les étapes suivantes :
- l'acquisition (21) des limites de la zone à éviter sous la forme d'un contour horizontal et d'altitudes supérieure (alt.sup.zone) et inférieure (alt.inf.zone), et la modélisation de la zone à éviter par un volume cylindrique (10) délimité par le contour horizontal et les altitudes supérieures et inférieures,
- la localisation du volume cylindrique (10) par rapport à la route prévue (2, 2') de l'aérodyne (1) pour déterminer si celle-ci traverse le volume cylindrique,
- si la route prévue (2, 2') traverse le volume cylindrique (10), la détermination (41) des points d'entrée (Z) et de sortie (Z') de la route prévue (2,2') dans le volume cylindrique (10),
- le calcul (42) des altitudes optimale (alt.opti) et maximale (alt.max) susceptibles d'être atteintes par l'aérodyne (1), et de la masse de celui-ci lors du passage par le point d'entrée (Z) compte tenu de la masse courante de l'aérodyne, et de sa consommation en carburant pour atteindre ce point,
- le calcul d'une nouvelle altitude de vol (alt.evit) pour l'évitement vertical du volume cylindrique (10), et d'un point de changement d'altitude (A1, B1) pour atteindre l'altitude d'évitement (alt.evit), en fonction des altitudes des limites inférieure (alt.inf.zone) et supérieure (alt.sup.zone) de la zone à éviter, des altitudes courante (alt.avion), maximale (alt.max) et optimale (alt.opti) de l'aérodyne (1), et de la position des points prévus de sortie (Z') et de descente (T) de l'aérodyne (1), et
- la mise à jour (28) de la nouvelle altitude de vol (alt.avion), et l'introduction de la position du point de changement d'altitude (A1, B1), dans le dispositif de pilotage automatique (14).

2. Procédé selon la revendication 1,
caractérisé en ce qu'il comprend l'évitement (46, 47, 69, 70) de la zone par en dessous du volume cylindrique (10) lorsque l'altitude inférieure (alt.inf.zone) de la zone est supérieure à une certaine limite prédéterminée (alt.D, alt.min), et lorsque l'altitude supérieure (alt.sup.zone) de la zone se trouve au-dessus de l'altitude maximale (alt.max) susceptible d'être atteinte par l'aérodyne au point d'entrée (Z) dans la zone, ou bien lorsque le point de descente prévu (T) se trouve dans le volume cylindrique (10).

3. Procédé selon la revendication 1 ou 2,
caractérisé en ce que l'altitude d'évitement (alt.evit) est de préférence égale à l'altitude optimale (alt.opti) de l'àérodyne (1) au point d'entrée (Z).

4. Procédé selon l'une des revendications précédentes,
caractérisé en ce qu'il comprend en outre périodiquement le calcul et l'affichage (27) de la distance entre la position courante de l'aérodyne (1) et le point de sortie (A1) de la route prévue (2) vers la trajectoire d'évitement (A1-A4), l'activation (28) de la nouvelle route incluant la trajectoire d'évitement sélectionnée étant effectuée si celle-ci a été validée par l'opérateur.

5. Procédé selon la revendication 4,
caractérisé en ce qu'il comprend en outre périodiquement le calcul et l'affichage (31) de la distance entre la position courante de l'aérodyne (1) et la zone à éviter (10), si le point de sortie (A1) est dépassé sans que la nouvelle route ait été validée, et l'affichage (32) d'un message d'alerte lorsque l'aérodyne (1) pénètre dans la zone à éviter (10).

6. Procédé selon l'une des revendications précédentes,
caractérisé en ce que dans le cas d'un évitement par en dessous de la zone à éviter, et si la distance entre le point de sortie (Z') de la route prévue (2, 2') du volume cylindrique (10) et le point prévu de descente (T) est inférieure à un seuil prédéterminé, il comprend le calcul (51) d'un nouveau point de descente (T') correspondant au point de jonction de la trajectoire d'évitement à l'altitude d'évitement (alt.evit) avec la trajectoire de descente (2') initialement prévue.

7. Procédé selon l'une des revendications précédentes,
caractérisé en ce que si l'évitement de la zone est possible par dessus et par en dessous, il comprend la sélection (64) de la trajectoire d'évitement située par rapport à l'aérodyne (1) en direction de l'altitude optimale (alt.opti).

8. Procédé selon l'une des revendications précédentes,
caractérisé en ce que la zone à éviter est une zone météorologique dangereuse, notamment turbulence de ciel clair, givrage.

## Patentansprüche

1. Verfahren zur automatischen Steuerung eines Flugzeugs, um vertikal eine feste Zone mit vordefinierten geometrischen Umrissen zu umfliegen, wobei das Flugzeug (1) einen Autopiloten (14) besitzt, in den eine vorgegebene Flugroute (2, 2') und ein vertikales Flugprofil mit einer Reiseflughöhe und der Position des Beginns des Landeanflugs (T) zur vorgesehenen Landebahn eingespeichert wurde, wobei das automatische Steuerverfahren nacheinander die folgenden Schritte enthält:
- Erfassung (21) der Grenzen der zu vermeidenden Zone in Form eines waagrechten Umrisses und einer Obergrenze (alt.sup.zone) und einer Untergrenze (alt.inf.zone) sowie Modellbildung der zu meidenden Zone in Form eines zylindrischen Volumens (10), das durch den horizontalen Umriß und die Ober- und Untergrenze definiert wird,
- Lokalisierung des zylindrischen Volumens (10) bezüglich der für das Flugzeug vorgesehenen Flugroute (2, 2'), um zu bestimmen, ob diese Route das zylindrische Volumen schneidet,
- Bestimmung (41) des Eintrittspunkts (Z) und des Austrittspunkts (Z') der vorgesehenen Flugroute (2, 2') bezüglich des zylindrischen Volumens (10), wenn die vorgesehene Route (2, 2') das zylindrische Volumen (10) durchquert,
- Berechnung (42) der optimalen Höhe (alt.opti) und der maximalen Höhe (alt.max), die das Flugzeug (1) erreichen kann, und der Masse des Flugzeugs beim Erreichen des Eintrittspunkts (Z) unter Berücksichtigung der aktuellen Masse des Flugzeugs und seines Treibstoffverbrauchs bis zum Erreichen dieses Punkts,
- Berechnung einer neuen Flughöhe (alt.evit), um vertikal das zylindrische Volumen (10) zu umfliegen, und eines Punkts (A1, B1), in dem die bisherige Höhe verlassen werden soll, um die neue Flughöhe (alt.evit) zu erreichen, abhängig von der Untergrenze (alt.inf.zone) und der Obergrenze (alt.sup.zone) der zu vermeidenden Zone, von der aktuellen Höhe (alt.avion), der maximalen Höhe (alt.max) und der optimalen Höhe (alt.opti) des Flugzeugs sowie der Position des vorgesehenen Austrittspunkts (Z') aus der Zone und der Position (T) des Übergangs in den Landeanflug des Flugzeugs (1),
- und die Aktualisierung (28)der neuen Flughöhe (alt.avion) sowie Eingabe der Position des Punkts (A1, B1), an dem diese Höhe verlassen werden soll, in den Autopiloten (14).

2. Verfahren nach Anspruch 1, dadurch gekennzeichnet, daß das zylindrische Volumen (10) unterflogen wird (46, 47, 69, 70), wenn die Untergrenze der Zone (alt.inf.zone) über einer bestimmten vorgegebenen Grenze (alt.D, alt.min) liegt und wenn die Obergrenze der Zone (alt.sup.zone) sich oberhalb der maximalen Höhe (alt.max) befindet, die vom Flugzeug am Eintrittspunkt (Z) in die Zone erreicht werden kann, oder wenn der vorgesehene Punkt (T) des Beginns des Sinkflugs sich in dem zylindrischen Volumen (10) befindet.

3. Verfahren nach Anspruch 1 oder 2, dadurch gekennzeichnet, daß die Umleitungshöhe (alt.evit) vorzugsweise der optimalen Höhe (alt.opti) des Flugzeugs (1) im Punkt (Z) des Eintritts in die Zone gleicht.

4. Verfahren nach einem der vorstehenden Ansprüche, dadurch gekennzeichnet, daß es außerdem eine periodische Berechnung und Anzeige (27) des Abstands zwischen der aktuellen Position des Flugzeugs (1) und dem Punkt (A1) enthält, in dem die vorgesehene Route (2) in Richtung der Umleitungsflugbahn (A1 bis A4) verlassen soll, wobei die Aktivierung (28) der neuen Flugbahn gemäß der gewählten Umleitungsflugbahn erfolgt, wenn sie vom Piloten bestätigt wurde.

5. Verfahren nach Anspruch 4, dadurch gekennzeichnet, daß es außerdem eine periodische Berechnung und Anzeige (31) des Abstands zwischen der aktuellen Position des Flugzeugs (1) und der zu vermeidenden Zone (10) enthält, wenn der Punkt (A1), an dem die vorgesehene Flugroute verlassen werden soll, bereits überflogen wurde, ohne daß eine neue Flugbahn bestätigt wurde, worauf eine Alarmnachricht angezeigt wird (32), wenn das Flugzeug (1) in die zu vermeidende Zone (10) eintritt.

6. Verfahren nach einem der vorstehenden Ansprüche, dadurch gekennzeichnet, daß, wenn die zu meidende Zone unterhalb umflogen werden soll und wenn der Abstand zwischen dem Austrittspunkt (Z') der vorgesehenen Flugroute (2, 2') aus dem zylindrischen Volumen (10) und dem für den Übergang in den Sinkflug vorgesehene Punkt (T) geringer als eine vorbestimmte Schwelle ist, das Verfahren die Berechnung (51) eines neuen Punkts (T') des Beginns des Landeabstiegs entsprechend dem Verbindungspunkt der Umleitungsflugbahn in der Umleitungsflughöhe (alt.evit) mit der ursprünglichen Landeanflugsroute (2') enthält.

7. Verfahren nach einem der vorstehenden Ansprüche, dadurch gekennzeichnet, daß es die Umleitungsflugbahn, wenn diese oberhalb wie unterhalb der Zone möglich ist, aufgrund der optimalen Flughöhe (alt.opti) des Flugzeugs (1) auswählt (64).

8. Verfahren nach einem der vorstehenden Ansprüche, dadurch gekennzeichnet, daß die zu vermeidende Zone eine gefährliche Schlechtwetterzone, insbesondere eine Turbulenz am wolkenlosen Himmel oder eine Vereisung ist.

## Claims

1. Method for automatically controlling an aerodyne for the vertical avoidance of a fixed zone with predefined geometrical contours, the aerodyne (1) being equipped with an automatic piloting device (14) into which have been input a scheduled route (2, 2') and a vertical trajectory profile comprising a cruising flight altitude and the position of a point of descent (T) towards the scheduled runway, said method of automatic control comprising the following steps in succession:
- acquiring (21) the limits of the zone to be avoided in the form of a horizontal contour and upper (alt.upp.zone) and lower (alt.low.zone) altitudes, and modelling the zone to be avoided by a cylindrical volume (10) delimited by the horizontal contour and the upper and lower altitudes,
- locating the cylindrical volume (10) with respect to the scheduled route (2, 2') of the aerodyne (1) so as to determine whether said route traverses the cylindrical volume,
- if the scheduled route (2, 2') traverses the cylindrical volume (10), determining (41) the points of entry (Z) and of exit (Z') of the scheduled route (2, 2') in the cylindrical volume (10),
- calculating (42) the optimum (alt.opti) and maximum (alt.max) altitudes capable of being attained by the aerodyne (1), and the weight of the latter as it passes through the point of entry (Z), taking into account the current weight of the aerodyne, and how much fuel it has consumed in order to reach this point,
- calculating a new flight altitude (alt.avoid) for the vertical avoidance of the cylindrical volume (10), and a point of change of altitude (A1, B1) so as to attain the avoidance altitude (alt.avoid), as a function of the altitudes of the lower (alt.low.zone) and upper (alt.upp.zone) limits of the zone to be avoided, of the current (alt.aircraft), maximum (alt.max) and optimum (alt.opti) altitudes of the aerodyne (1), and of the position of the scheduled points of exit (Z') and of descent (T) of the aerodyne (1), and
- updating (28) the new flight altitude (alt.aircraft) and inputting the position of the point of change of altitude (A1, B1) into the automatic piloting device (14).

2. Method according to claim 1, characterised in that it comprises the avoidance (46, 47, 69, 70) of the zone by flying below the cylindrical volume (10) when the lower altitude (alt.low.zone) of the zone is greater than a certain predetermined limit (alt.D, alt.min), and when the upper altitude (alt.upp.zone) of the zone lies above the maximum altitude (alt.max) capable of being attained by the aerodyne at the point of entry (Z) into the zone, or else when the scheduled point of descent (T) lies in the cylindrical volume (10).

3. Method according to claim 1 or 2, characterised in that the avoidance altitude (alt.avoid) is preferably equal to the optimum altitude (alt.opti) of the aerodyne (1) at the point of entry (Z).

4. Method according to any of the preceding claims, characterised in that it further comprises periodically calculating and displaying (27) the distance between the current position of the aerodyne (1) and the point of exit (A1) from the scheduled route (2) towards the avoidance trajectory (A1-A4), the activation (28) of the new route incorporating the selected avoidance trajectory being performed if the latter has been confirmed by the operator.

5. Method according to claim 4, characterised in that it further comprises periodically calculating and displaying (31) the distance between the current position of the aerodyne (1) and the zone to be avoided (10), if the point of exit (A1) has been passsed without the new route having been confirmed, and displaying (32) a warning message when the aerodyne (1) enters the zone to be avoided (10).

6. Method according to any of the preceding claims, characterised in that in the case of an avoidance by flying below the zone to be avoided, and if the distance between the point of exit (Z') of the scheduled route (2, 2') from the cylindrical volume (10) and the scheduled point of descent (T) is less than a predetermined threshold, it comprises the calculation (51) of a new point of descent (T') corresponding to the point at which the avoidance trajectory at the avoidance altitude (alt.avoid) meets the initially scheduled descent trajectory (2').

7. Method according to any of the preceding claims, characterised in that if the avoidance of the zone is possible by flying above and below, it comprises the selection (64) of the avoidance trajectory situated with respect to the aerodyne (1) in the direction of the optimum altitude (alt.opti).

8. Method according to any of the preceding claims, characterised in that the zone to be avoided is a dangerous meteorological zone, especially clear air turbulence or icing.
